# EUROPEAN PATENT APPLICATION

(11) **EP 3 696 585 A1**
(43) Date of publication of application: **19.08.2020**
(21) Application number: 18875125.9
(22) Date of filing: 08.11.2018
(51) Int. Cl.: G02B 6/44

(54) **IN-BUILDING SHARING DEVICE, METHOD AND SYSTEM SUPPORTING MULTI-OPERATOR ACCESS**

(30) Priority: 09.11.2017 CN 201711099099
(71) Applicant: Huawei Technologies Co., Ltd., Longgang District Shenzhen, Guangdong 518129 (CN)
(72) Inventor: WU, Wenxin, Shenzhen Guangdong 518129 (CN); YU, Jianxiong, Shenzhen Guangdong 518129 (CN)
(74) Representative: Grünecker Patent- und Rechtsanwälte PartG mbB
(86) International application number: PCT/CN2018/114454
(87) International publication number: WO 2019/091415

(57) **Abstract**

The present invention provides a fiber access terminal, including user box (10) and an operator box (20), where the user box includes: an optical cable inlet (110) and an optical cable (112) connecting to a user network (1), where the optical cable (112) connecting to the user network (1) passes through the optical cable inlet (110) to connect to the user network (1); and an optical fiber connecting element (100), where one end of the optical fiber connecting element (100) is connected to the optical cable (112) connecting to the user network (1), and the other end enters the operator box (20) through an optical cable hole (114); and the operator box (20) includes: an optical cable inlet (210), where at least one connection optical cable (211) connecting to an external communications network (2) passes through the optical cable inlet (210) to connect to the external communications network (2); and a plurality of adapters (212), where the plurality of adapters (212) are disposed in a plurality of adjacent vertical arrays on a panel 280, one end is connected to the optical fiber connecting element (100), and the other end is connected to the external communications network (2).

## Description

### TECHNICAL FIELD

The present invention relates to the field of data communication devices, and in particular, to an in-building shared apparatus, a method, and a system for supporting multi-operator access.

### BACKGROUND

An optical distribution network (Optical Distribution Network, ODN) is a fiber to the home (Fiber To The Home, FTTH) fiber optic network based on a passive optical network (Passive Optical Network, PON) technology, and the optical distribution network is configured to provide an optical transmission channel between a central office device and a user terminal device. A fiber access terminal (Fiber Access Terminal, FAT) is located at a user access point in the fiber optic network, and may implement functions such as connecting a distribution optical cable and a drop cable, and a direct connection, branching, and protection of optical fibers. The FAT is usually mounted at the bottom of a corridor or higher in a weak-current well or a wiring room in the corridor of a multi-story building to implement branching of a plurality of drop cables; or an optical splitter is mounted to implement splitting and branching and implement a connection from an operator to a plurality of users in the building.

A currently used FAT is usually mounted in a basement of a building. At least one user board is disposed inside the FAT, and the user board may establish a connection to an optical fiber of a user network. In addition, an operator board may also be disposed inside the FAT, and the operator board may establish a connection to an optical fiber of an external communications network. Therefore, the user network is connected to the external communications network by using the user board and the operator board.

However, an operator board and a user board of an existing FAT are independent of each other, and a user network is connected to an external communications network for the user board and one operator board. Therefore, an implementation solution of the existing FAT is complex and bulky. Especially when another different operator takes the place of a current operator to provide a service to users, the existing FAT cannot implement a connection from the different operator to the users.

### SUMMARY

In view of this, embodiments of the present invention provide a fiber access terminal and a method for connecting an external communications network (2) to a user network (1), so that interconnection and interworking between a user network in a corridor and external communications networks provided by different service providers can be implemented quickly and conveniently. This resolves a problem in the prior art that a connection from different operators to users cannot be implemented.

This application provides a fiber access terminal, including a user box (10) and an operator box (20), where the user box (10) includes:
an optical cable inlet (110) and an optical cable (112) connecting to a user network (1), where the optical cable (112) connecting to the user network (1) passes through the optical cable inlet (110) to connect to the user network (1); and
an optical fiber connecting element (100), where one end of the optical fiber connecting element (100) is connected to the optical cable (112) connecting to the user network (1), and the other end enters the operator box (20) through an optical cable hole (114); and
the operator box (20) includes:
   an optical cable inlet (210), where an optical cable (211) connecting to an external communications network (2) passes through the optical cable inlet (210) to connect to the external communications network (2); and a plurality of adapters (212), where the plurality of adapters (212) are disposed in a plurality of adjacent vertical arrays on a panel (280), one end of any one of the plurality of adapters (212) is connected to the optical fiber connecting element (100), and the other end is connected to the external communications network (2); where the user box (10) includes a first area (12) and a second area (14), the operator box (20) includes a third area (22) and a fourth area (24), the third area (22) is accessed by an operator that provides a service to the user network (1), and the second area (14) and the fourth area (24) are shared areas. Based on a combination of the foregoing features, especially a modular feature of the FAT, the FAT provided in this application establishes a connection in a simple and fast manner between an operator that provides a service to a user and each individual user in a building through a connection between an optical fiber of the user box and a corresponding adapter in the operator box.

In addition, within the framework of this application and in the following claims, the term "module" is used to indicate a self-contained (self-contained) unit that may be individually handled and that is provided with a supporting and/or containing casing of an optional internal component.

Based on the foregoing design of the fiber access terminal, the operator box (20) further includes a pigtail (214), where one end of the pigtail (214) is provided with a connector (216), the connector (216) is connected to a corresponding adapter in the plurality of adapters (212), to connect to the user network (1) by using the optical fiber connecting element (100) connected to the any one adapter (212), and the other end of the pigtail (214) is connected to the external communications network (2) by using the connection optical cable (211) connected to the pigtail (214).

The operator box (20) includes a plurality of adapters, each adapter is connected to an optical fiber of a specific operator box, and the user box is connected to a selected operator box very fast. Therefore, based on this fast and easy connection, in a case of a new connection, for example, in an application scenario in which the user decides to replace a serving operator with a new operator, the user box can be connected to a new operator box without interfering with a previous operator box, and interconnection and interworking between a new operator box and a user box can be better implemented.

Based on the foregoing implementation, in the fiber access terminal provided in this application, the third area (22) forms enclosed space by using a third enclosure door (220).

Further, the optical fiber connecting element (100) extends in the second area (14) and the fourth area (24).

In this design, optical fibers from modules can be placed and protected in an effective manner in internal space of the operator box or the user box, and the optical fibers can also extend.

Based on the foregoing implementation, the user box (10) provided in this application further includes an optical fiber docking area (180), and when not in use, the optical fiber connecting element (100) docks in the optical fiber docking area (180). Therefore, an optical fiber that is not in use is managed and maintained neatly.

Based on the foregoing implementation, the user box (10) further includes an optical fiber splicing area (116), configured to splice the optical fiber connecting element (100), so that one end of the spliced optical fiber connecting element (100) is connected to the optical cable (112) connecting to the user network (1); and the operator box (20) further includes an optical fiber splicing area (260), configured to splice an optical fiber connecting element (214), so that the spliced pigtail (214) is connected to the connection optical cable (211) connecting to the external communications network (2).

In this implementation, the operator box and the user box can be flexibly configured, managed, and maintained. Even if the user replaces the serving operator with the new operator, interconnection and interworking between the user box and a new operator box can be implemented quickly and simply.

Based on the foregoing implementation, the at least one operator box (20) further includes at least one optical fiber coiling area (270), configured to coil an optical fiber in the third area of the operator box (20); and the at least one user box (10) further includes at least one optical fiber coiling area (118), configured to coil an optical fiber in the first area of the user box (10).

Based on the foregoing implementations, there may be a plurality of user boxes 10 and a plurality of operator boxes 20 provided in this application. The user boxes 10 and the operator boxes 20 are in a stacking structure and are mutually independent, so that a quick connection or switching between operators and between users can be fast implemented.

This application further provides a fiber access terminal, including at least one operator box (20), where the operator box (20) includes:
an optical cable inlet (210), where at least one connection optical cable 211 connecting to an external communications network (2) passes through the optical cable inlet (210) to connect to the external communications network (2); and
the plurality of adapters (212), where the plurality of adapters (212) are disposed in a plurality of adjacent vertical arrays on a panel (280), one end is connected to an optical fiber connecting element 100, and the other end is connected to the external communications network (2); where
each of the at least one user box (10) includes a first area (12) and a second area (14), each of the at least one operator box (20) includes a third area (22) and a fourth area (24), the third area (22) is accessed by an operator that provides a service to the user network (1), and the second area (14) and the fourth area (24) are shared areas.

Based on the foregoing design, the operator box (20) provided in this application further includes an optical fiber connecting element (214), one end of the pigtail (214) is provided with a connector (216), the connector (216) is connected to a corresponding adapter in the plurality of adapters (212), to connect to the user network (1) by using the optical fiber connecting element (100) connected to the any one adapter (212), and the other end of the pigtail (214) is connected to the external communications network (2) by using the connection optical cable (211) connected to the pigtail (214).

Based on the foregoing design and the provided design of the operator box, the operator box (20) provided in this application further includes at least one optical fiber coiling area (270), configured to coil an optical fiber in the third area of the operator box (20).

Based on a combination of the foregoing features, especially because of the design of the operator box, a connection between an operator that provides a service to a user and each individual user in a building is established in a simple and fast manner through a connection between an optical fiber of the user box and a corresponding adapter in the operator box.

This application further provides a method for connecting an external communications network (2) to a user network (1), where the method includes the following steps:
(a) providing at least one user box (10), where the user box (10) includes: at least one optical cable inlet (110) and an optical cable (112) connecting to a user network (1), where the optical cable (112) connecting to the user network (1) passes through the optical cable inlet (110) to connect to the user network (1); and an optical fiber connecting element (100), where one end of the optical fiber connecting element (100) is connected to the optical cable (112) connecting to the user network (1), and the other end enters an operator box (20) through an optical cable hole (114);
(b) providing at least one operator box (20), where the operator box (20) includes:
   an optical cable inlet (210), where an optical cable (211) connecting to the external communications network (2) passes through the optical cable inlet (210) to connect to the external communications network (2); and a plurality of adapters (212), where the plurality of adapters (212) are disposed in a plurality of adjacent vertical arrays on a panel (280), one end of any one of the plurality of adapters (212) is connected to the optical fiber connecting element (100), and the other end is connected to the external communications network (2); and
(c) connecting one end of the optical fiber connecting element (100) of the at least one user box (10) to the adapter (212) in the operator box (20) through a lower optical cable hole (114a) of the user box (10) and an upper optical cable hole (2140a) of the operator box (20), to connect to the external communications network (2) by using the adapter, where the other end of the optical fiber connecting element (100) is connected to the user network (10).

According to the connection method in this application, the step (c) is specifically:
connecting one end of the optical fiber connecting element (100) of the at least one user box (10) to a corresponding selected adapter in the plurality of adapters (212) of the operator box (20), where the selected adapter is connected to a connector (216) of a corresponding selected pigtail (214), to connect to the external communications network by using the pigtail (214), where the other end of the optical fiber connecting element (100) is connected to the user network (1).

According to the connection method, the method further includes the following steps:
(d) providing at least one operator box (30), where the operator box (30) includes: an optical cable inlet (310), where an optical cable (311) connecting to an external communications network (3) passes through the optical cable inlet (310) to connect to the external communications network (3); and a plurality of adapters (312), where the plurality of adapters (212) are disposed in a plurality of adjacent vertical arrays on a panel (380); and
(e) when the optical fiber connecting element (100) is switched from the first operator box (20) to the third operator box (30), removing one end of the optical fiber connecting element (100) from an adapter in the first operator box (20), so that one end of the optical fiber connecting element (100) is connected to an adapter (312) in the third operator box (30) through a lower optical cable hole (2140b) of a second operator box (20) and an upper optical cable hole (3140a) of the third operator box (30), and the other end of the optical fiber connecting element (100) is connected to the external communications network (3) through the optical cable inlet (310).

According to the connection method, interconnection and interworking between a user network in a corridor and external communications networks provided by different service providers can be quickly and conveniently implemented.

This application further provides a fiber access terminal, including: at least one user box (10), a first operator box (20), and a third operator box (30), where the user box (10) includes:
at least one optical cable inlet (110) and an optical cable (112) connecting to a user network (1), where the optical cable (112) connecting to the user network (1) passes through the optical cable inlet (110) to connect to the user network (1); and
an optical fiber connecting element (100), where one end of the optical fiber connecting element (100) is connected to the optical cable (112) connecting to the user network (1), and the other end enters the operator box (20) and/or the operator box (30) through an optical cable hole (114);
the operator box (20) includes:
   an optical cable inlet (210), where an optical cable (211) connecting to an external communications network (2) passes through the optical cable inlet (210) to connect to the external communications network (2); and
   a plurality of adapters (212), where the plurality of adapters (212) are disposed in a plurality of adjacent vertical arrays on a panel (280), one end of any one of the plurality of adapters (212) is connected to the optical fiber connecting element (100), and the other end is connected to the external communications network (2);
   the third operator box (30) includes:
      an optical cable inlet (310), where an optical cable (311) connecting to an external communications network (3) passes through the optical cable inlet (310) to connect to the external communications network (3); and
      a plurality of adapters (312), where the plurality of adapters (212) are disposed in a plurality of adjacent vertical arrays on a panel (380); where
      when the optical fiber connecting element (100) is switched from the first operator box (20) to the third operator box (30), one end of the optical fiber connecting element (100) is removed from the adapter in the first operator box (20), so that one end of the optical fiber connecting element (100) is connected to an adapter (312) in the third operator box (30) through a lower optical cable hole (2140b) of a second operator box (20) and an upper optical cable hole (3140a) of the third operator box (30), and the other end of the optical fiber connecting element (100) is connected to the external communications network (3) through the optical cable inlet (310).

Based on the foregoing design of the fiber access terminal, the user box (10) includes a first area (12) and a second area (14), the operator box (20) includes a third area (22) and a fourth area (24), and the operator box (30) includes a fifth area (32) and a sixth area (34); where
the third area (22) or the fifth area (32) is accessed by an operator that provides a service to the user network (1), and the second area (14) and the fourth area (24) are shared areas, or the second area (14), the fourth area (24), and the sixth area (34) are shared areas.

Based on the foregoing design of the fiber access terminal, the operator box (20) further includes a pigtail (214), where one end of the pigtail (214) is provided with a connector (216), the connector (216) is connected to a corresponding adapter in the plurality of adapters (212), to connect to the user network (1) by using the optical fiber connecting element (100) connected to the any one adapter (212), and the other end of the pigtail (214) is connected to the external communications network (2) by using the connection optical cable (211) connected to the pigtail (214); and/or
the operator box (30) further includes a pigtail (314), where one end of the pigtail (314) is provided with a connector (316), the connector (316) is connected to a corresponding adapter in the plurality of adapters (312), to connect to the user network (1) by using the optical fiber connecting element (100) connected to the any one adapter (312), and the other end of the pigtail (314) is connected to the external communications network (3) by using the connection optical cable (211) connected to the pigtail (314).

According to the fiber access terminal in this application, interconnection and interworking between a user network in a corridor and external communications networks provided by different service providers can be quickly and conveniently implemented. Especially when a user switches between serving operators, by using the fiber access terminal, any one connecting element in the user box may be configured to connect to a different operator box. This avoids a case in which a plurality of connection elements of the user box are needed to connect to a plurality of operator boxes, and implementation is simple and operability is strong.

### BRIEF DESCRIPTION OF DRAWINGS

To describe the technical solutions in the embodiments of the present invention or in the prior art more clearly, the following briefly describes the accompanying drawings required for describing the embodiments or the prior art. It is clear that the accompanying drawings in the following description show merely some embodiments of the present invention, and a person of ordinary skill in the art may still derive other drawings from these accompanying drawings without creative efforts.
FIG. 1 shows an architecture of a communications network applied in an embodiment of the present invention;
FIG. 2 is a schematic structural diagram of a user box according to an embodiment of the present invention;
FIG. 3 is a schematic structural diagram of an operator box according to an embodiment of the present invention;
FIG. 4 is a schematic structural diagram of a FAT according to an embodiment of the present invention;
FIG. 5 is a schematic structural diagram of a FAT according to an embodiment of the present invention; and
FIG. 6 is a schematic structural diagram of another FAT according to an embodiment of the present invention.

### DESCRIPTION OF EMBODIMENTS

For ease of understanding, the following clearly and completely describes the technical solutions in the embodiments of the present invention with reference to the accompanying drawings in the embodiments of the present invention. It is clear that the described embodiments are merely some but not all of the embodiments of the present invention. All other embodiments obtained by a person of ordinary skill in the art based on the embodiments of the present invention without creative efforts shall fall within the protection scope of the present invention.

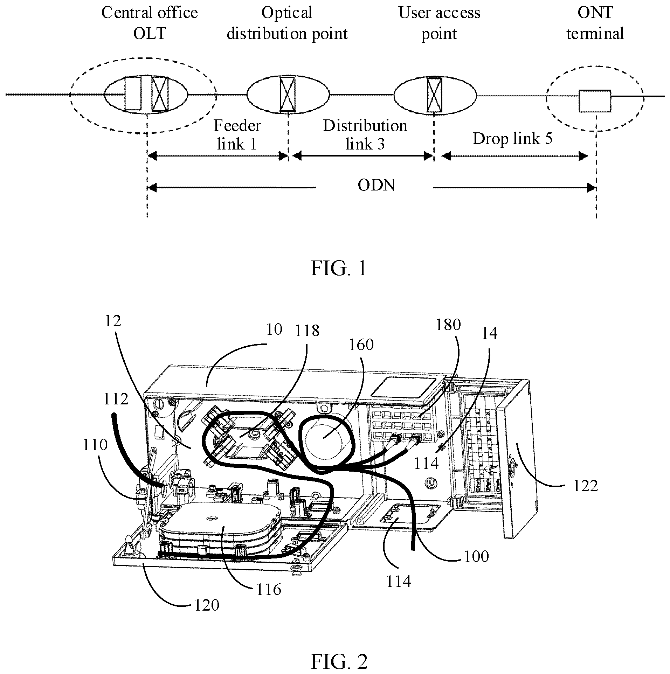

FIG. 1 is a diagram of a networking architecture of an optical distribution network (Optical Distribution Network, ODN). The optical distribution network is a part of an FTTx optical network based on a passive optical network (Passive Optical Network, PON) technology, mainly to provide an optical transmission channel between a central office device such as an optical line terminal (Optical Line Terminal, OLT), and an optical network unit (Optical Network Unit, ONU). FTTx may be FTTH (Fiber To The Home, fiber to the home), FTTC (Fiber To The Curb, fiber to the curb), FTTP (Fiber To The Premises, fiber to the premises), FTTN (Fiber To The Node Or Neighborhood, fiber to the node), FTTO (Fiber To The Office, fiber to the office), or FTTSA (Fiber To The Service Area, fiber to the service area).

An FTTH network is used as an example. Down from an OLT device at a center office (centre office, CO), the FTTH network includes a feeder link 1, a first 1: N splitter 2, a distribution link 3, a second 1: N splitter 4, and at least one drop link 5. In this application, a fiber access terminal (Fiber Access Terminal, FAT) is located at a user access point in the FTTx network, and may implement functions such as connection of the distribution link 3 and the drop link 5, and a direct connection, branching, and protection of optical fibers. The FAT is usually mounted at the bottom of a corridor or higher in a weak-current well or a wiring room in the corridor of a multi-story building to implement branching of a plurality of drop cables; or an optical splitter is mounted to implement splitting and branching and implement a connection from an operator to a plurality of users in the building. Although one type of network of an FTTx structure is used as an example in the present invention, the present invention is applicable to another network structure.

FIG. 2 shows a user box 10 according to an embodiment of this application. The user box is a module of a FAT, and is located at the user access point in the foregoing network architecture. Specifically,
the user box (10) includes:
an optical cable inlet (110) and an optical cable (112) connecting to a user network (1), where the optical cable (112) connecting to the user network (1) passes through the optical cable inlet (110) to connect to the user network (1); and
an optical fiber connecting element (100), where one end of the optical fiber connecting element (100) is connected to the optical cable (112) connecting to the user network (1), and the other end enters an operator box (20) through an optical cable hole (114); where the user box (10) includes a first area (12) and a second area (14), and the second area (14) is a shared area. Optionally, as shown in FIG. 2, in an embodiment, each user box 10 is further provided with a pair of enclosure doors (enclosure door) 120 and 122. The enclosure doors 120 and 122 are hinged to a box-shaped body of the user box 10, to form the enclosed first area 12 and the enclosed second area 14. Then, enclosed compartments are formed.

The enclosure doors 120 and 122 may be provided with closure elements or locks 12a and 13a (not shown in the figure) respectively, to implement exclusive or shared access to the first area 12 and the second area 14. For example, the user box 10 may be provided with a first area 12 and a second area 14 that are both of a shared type, and the first area 12 and the second area 14 may be accessed by all operators that provide services to users, to perform a connection operation and/or a maintenance operation.

Optionally, as shown in FIG. 2, in an embodiment, the user network 1 includes at least one connection optical cable 112. Each optical cable includes a plurality of optical fibers connected to respective users.

Optionally, as shown in FIG. 2, in an embodiment, the optical fiber connecting element 100 extends in the second area (14) and a fourth area (24). Optionally, the optical fiber connecting element 100 may be a pigtail. Use of the pigtail allows the user network 1 to have a plurality of separation points. The separation points allow the user network 1 to be divided into a plurality of parts that are independent of each other, to facilitate processing of the user network 1, for example, when there is a fault. Further, optical fibers are spliced by using a butt splicing technology known by a person skilled in the art, so that the pigtail 100 is connected to an optical fiber in the connection optical cable 112 of the user network 1.

Optionally, as shown in FIG. 2, in another embodiment, the user box 10 further includes an optical fiber splicing area 116, configured to splice the optical fiber connecting element 100, so that one end of the spliced optical fiber connecting element 100 is connected to the optical cable 112 connecting to the user network 1, and the other end enters an operator box 20 through the optical cable hole 114, to connect to an external communications network 2.

Optionally, in another embodiment, the user box 10 further includes an optical fiber docking area 180. When not in use, the optical fiber connecting element 100 docks in the optical fiber docking area 180. In this way, optical fibers that are not in use can be collected in an organized manner for future use.

Optionally, in another embodiment, the at least one user box 10 further includes: at least one optical fiber coiling area 118, configured to coil an optical fiber in the first area 12 of the user box 10; and an optical fiber adjustment area 160, configured to adjust a length of the optical fiber in the first area of the user box 10.

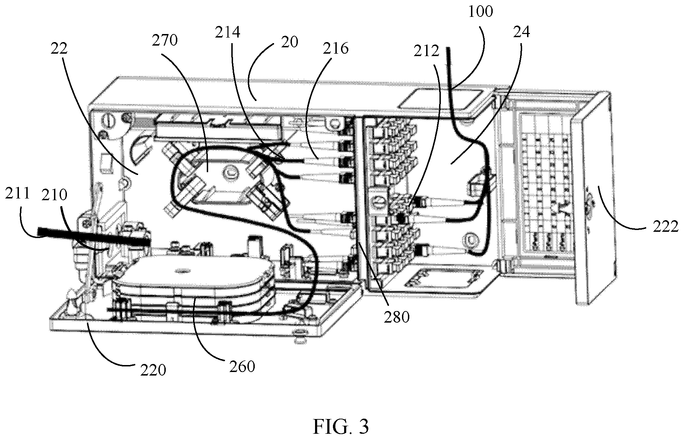

An embodiment of the present invention further provides an operator box 20. As shown in FIG. 3, the operator box 20 is a module of a FAT, and is located at the user access point in the foregoing network architecture. Specifically, the operator box 20 includes:
an optical cable inlet (210), where an optical cable (211) connecting to an external communications network (2) passes through the optical cable inlet (210) to connect to the external communications network (2); and a plurality of adapters (212), where the plurality of adapters (212) are disposed in a plurality of adjacent vertical arrays on a panel (280), one end of any one of the plurality of adapters (212) is connected to an optical fiber connecting element (100), and the other end is connected to the external communications network (2); where the user box (10) includes a first area (12) and a second area (14), the operator box (20) includes a third area (22) and a fourth area (24), the third area (22) is accessed by an operator that provides a service to the user network (1), and the second area (14) and the fourth area (24) are shared areas. An optical fiber of each user is connected to a corresponding selected adapter of the operator box, so that each individual user in a building is allowed to connect to each operator network in a simple and fast manner in a simple and fast manner.

Optionally, in an embodiment of this application, as shown in FIG. 3, each operator box 20 is further provided with a pair of enclosure doors (enclosure door) 220 and 222. The enclosure doors 220 and 222 are hinged to a box-shaped body of the operator box 20, to form the enclosed third area 22 and the enclosed fourth area 24. Then, enclosed compartments are formed.

The enclosure doors 220 and 222 may be provided with closure elements or locks 22a and 23a (not shown in the figure) respectively, to implement exclusive or shared access to the third area 22 and the fourth area 24. For example, different access rights may be set for the third area 22 and the fourth area 24 in the operator box 20. The third area 22 may be set to be accessible by an operator that provides a service to a user, and the fourth area 24 may be set as a shared area that is open to all operators, including the operator that provides the service to the user, another operator that does not provide a service to the user, and the like, to perform a connection operation and/or a maintenance operation. The foregoing manners may be implemented by using a closure device, a lock, or the like.

In the foregoing implementation, each operator is allowed to use an operator box of the operator, and the operator box is structurally independent of the user box and another possible operator box of a rival operator.

Optionally, the operator box 20 includes the at least one connection optical cable 211. Each optical cable includes a plurality of optical fibers connected to the external communications network.

Optionally, in another embodiment of this application, the operator box (20) further includes a pigtail (214). One end of the pigtail (214) is provided with a connector (216), and the connector (216) is connected to a corresponding adapter in the plurality of adapters (212), to connect to the user network (1) by using the optical fiber connecting element (100) connected to the any one adapter (212). The other end of the pigtail (214) is connected to the external communications network (2) by using the connection optical cable (211) connected to the pigtail (214).

As shown in FIG. 3, the optical fiber connecting element 100 extends in the second area 14 and the fourth area 24.

Optionally, the operator box (20) further includes an optical fiber splicing area 260, configured to splice a pigtail 214, so that the spliced pigtail 214 is connected to the connection optical cable 211 connecting to the external communications network 2.

Optionally, the adapters 212 of the operator box 20 are connected to corresponding optical fibers in a connection optical cable 112 connecting to the user network by using a plurality of optical fiber connection elements 100.

Optionally, the adapters 212 are disposed in the plurality of adjacent vertical arrays on the panel 280. The panel 280 may serve as a fixed bracket to mount the adapters, and the panel 280 is provided with a plurality of corresponding mutually-adjacent openings (not shown), for example, square openings. Therefore, each opening is configured to accommodate a corresponding adapter 212. The two compartments 22 and 24 of the operator box 20 are separated by the panel 280, so that an exterior of the adapter 212 can be accessed from the compartment 22.

Optionally, both upper and lower operator boxes 20 in a connection system include optical cable inlets 210 for respective connection optical cables 211 and 211' (not shown in the figure) that are owned by, for example, two different operators and connected to the external communications network 2. The optical cable inlet 210 is preferably formed at a lower end or an upper end of a side wall close to the optical cable 211 in the third area 22 of the operator box 20.

Optionally, the connector 216 of the pigtail 214 in the operator box 20 is connected to a corresponding selected adapter 212 in the plurality of adapters 212, to connect to the external communications network 2. Further, the other end of the adapter 212 is connected to the optical fiber connecting element 100 of the user network 10, to be operatively connected to the user network 1.

In the shown embodiment, an optical fiber connecting element 216 from the operator box 20 includes a corresponding pigtail connected to a corresponding optical fiber in the connection optical cable 211 for the external communications network 2.

Optionally, in another embodiment, in the shown embodiment, the at least one operator box 20 further includes at least one optical fiber coiling area 270, configured to coil an optical fiber in the third area of the operator box 20.

Optionally, as shown in FIG. 3, the operator box 20 further includes an optical fiber splicing area 260, configured to splice an optical fiber in the third area of the operator box 20, so that one end of the spliced optical fiber is connected to the optical cable 211 connecting to the external communications network 2, and the other end is connected to the optical fiber connecting element 100, to connect to the user network 1.

Optionally, in an embodiment provided in this application, if there are two or more operator boxes 20, each operator box 20 includes an adapter 212 for an optical fiber connector. As described above, the operator box 20 may be directly mounted on a wall of the building or on a support panel connected to a wall of the building.

Based on design structures of the user box and the operator box that are shown above, operation flexibility can be simply maximized when the external communications network is connected to the user network in the building, so that shared access to a network in a corridor is implemented.

In addition, in a case of a new connection (for example, during construction of a building or when a specific dwelling unit is inhabited by a user) and when a previous serving operator that one or more users already decide not to use as a provider is taken over, the user box and the operator box that are shown above allow each operator to connect to a user, without interfering with a previous operator box.

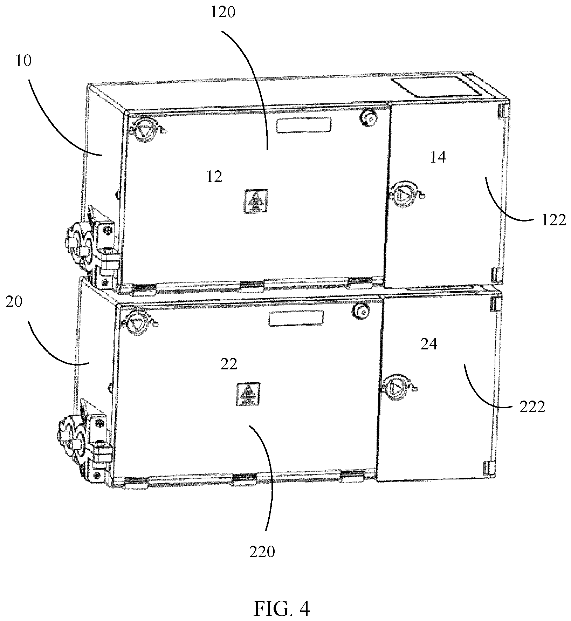

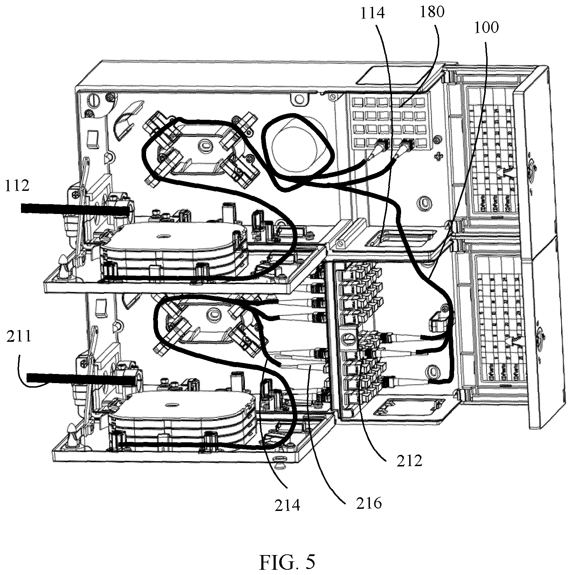

An embodiment of this application further provides a structural diagram of a modular connection system in which an external communications network 2 connects to a user network 1 in a building. As shown in FIG. 4 and FIG. 5, a fiber access terminal FAT is located at the user access point in the network architecture in FIG. 1. The FAT includes at least one user box 10 and at least one operator box 20.

The user box (10) includes: an optical cable inlet (110) and an optical cable (112) connecting to a user network (1), where the optical cable (112) connecting to the user network (1) passes through the optical cable inlet (110) to connect to the user network (1); and an optical fiber connecting element (100), where one end of the optical fiber connecting element (100) is connected to the optical cable (112) connecting to the user network (1), and the other end enters an operator box (20) through an optical cable hole (114).

The operator box (20) includes:
an optical cable inlet (210), where an optical cable (211) connecting to an external communications network (2) passes through the optical cable inlet (210) to connect to the external communications network (2); and a plurality of adapters (212), where the plurality of adapters (212) are disposed in a plurality of adjacent vertical arrays on a panel (280), one end of any one of the plurality of adapters (212) is connected to the optical fiber connecting element (100), and the other end is connected to the external communications network (2); where the user box (10) includes a first area (12) and a second area (14), the operator box (20) includes a third area (22) and a fourth area (24), the third area (22) is accessed by an operator that provides a service to the user network (1), and the second area (14) and the fourth area (24) are shared areas. Optionally, as shown in FIG. 4, the user box 10 and the operator box 20 are structurally independent of each other. Optionally, the user box 10 and the operator box 20 are particularly mounted on a support wall of a building or on a basically flat support panel (not shown), and the user box 10 is mounted above the operator box 20. There may be a plurality of user boxes 10 of a same structure. There may be a plurality of operator boxes 20 of a same structure. According to a connection requirement that needs to be satisfied, the user boxes 10 may be used interchangeably and placed in a most appropriate manner, and the operator boxes 20 may be used interchangeably and placed in a most appropriate manner, to implement a connection between the user boxes 10 and a connection between the user box 10 and the operator box 20.

The user boxes 10 includes the first area 12 and the second area 14, and the operator box 20 includes the third area 22 and the fourth area 24. The first area 12 forms enclosed space by using an enclosure door 120. The second area 14 forms enclosed space by using an enclosure door 122. The enclosure doors 120 and 122 may be provided with closure elements or locks 12a and 13a (not shown in the figure) respectively, to implement exclusive or shared access to the first area 12 and the second area 14. Each operator box 20 is also provided with a pair of enclosure doors (enclosure door) 220 and 222. The enclosure doors 220 and 222 are hinged to a box-shaped body of the operator box 20, to form the enclosed third area 22 and the enclosed fourth area 24. Then, enclosed compartments are formed. The enclosure doors 220 and 222 may be provided with closure elements or locks 22a and 23a (not shown in the figure) respectively, to implement exclusive or shared access to the third area 22 and the fourth area 24. For example, the operator box 20 may be provided with the third area 22 of a private type enclosed by the enclosure door 220. With the closure device or lock 22a, the third area 22 may be accessed by an operator having such a module. The operator box 20 may be further provided with the fourth area 24 of a shared type enclosed by the enclosure door 222. With the closure device or lock 23a, the fourth area 23 may be accessed by all operators that provide services to users in the building. In other words, the fourth area 23 of the shared type may be accessed by another operator in a corridor or in the building, to implement a connection operation and/or a maintenance operation in this manner.

Optionally, the third area 22 and the fourth area 24 are also separated by the panel 280, and the plurality of adapters 212 are disposed on the panel 280. Optionally, the first area 12 and the second area 14 are separated by a panel, or there may be no panel. If there is no panel, the first area 12 and the second area 14 spatially communicate with each other. If the panel 280 is not disposed, the adapters may be disposed on a fixed bracket (not shown in the figure). The fixed bracket is mainly configured to fasten the adapters.

Optionally, as shown in FIG. 5, the second area 14 and the fourth area 24 form a shared area by using the optical cable hole 114, so that the optical fiber connecting element 100 of the user box 10 extends from the second area 14 to the fourth area 24. The second area 14 and the fourth area 24 each have an optical cable hole, and the optical cable holes are symmetrically disposed. The optical cable hole 114 may be implemented in a plurality of manners. The optical cable hole 114 may be an opening, as shown in FIG. 5. For example, a movable square window is designed on a partition plate disposed below the second area, and a movable square window is designed on a partition plate disposed above the fourth area. Shapes of the two windows are not limited, and sizes of the windows are not limited. The two openings overlap with each other to form a channel that can accommodate the optical fiber connecting element 100. Alternatively, a partition plate disposed below the second area 14 may be designed as a movable partition plate, and a partition plate disposed below the fourth area 24 may be designed as a movable partition plate, and movement of the partition plate is implemented by using a screw, a bolt, or the like. When the user box 10 and the operator box 20 are independent of each other, the partition plate may be fastened by using a screw, a bolt, or the like, so that the second area or the fourth area forms independent and enclosed space. When the user box 10 or the operator box 20 is connected and needs to be used, the screw or bolt is removed, to open or remove the partition plate below the second area 14 of the user box 10 or a partition plate above the fourth area 24 of the operator box 20. Therefore, a channel that can accommodate the optical fiber connecting element 100 is formed, and interworking between the user network and the external communications network is implemented.

Optionally, as shown in FIG. 5, the optical fiber connecting element 100 is connected to a corresponding selected adapter in the plurality of adapters 212 of the operator box 20. The plurality of adapters 212 are disposed in the plurality of adjacent vertical arrays on the panel 280. The panel 280 is provided with a plurality of mutually-adjacent openings, for example, square openings, and each opening is configured to accommodate a corresponding adapter 212. The adapter 212 is disposed on the panel between the third area 22 and the fourth area 24 of the operator 20, and the adapter 22 may be accessed through the second area 14 of the user box 10.

Optionally, as shown in FIG. 5, the operator box 20 further includes a pigtail 214. One end of the pigtail 214 is provided with a connector 216, and the connector 216 is connected to a corresponding adapter in the plurality of adapters 212, to connect to the user network 1 by using the optical fiber connecting element 100 connected to the any one adapter 212. The other end of the pigtail 214 is connected to the external communications network 2 by using the connection optical cable (211) connected to the pigtail 214. Therefore, interconnection and interworking between the user network 1 and the external communications network 2 are implemented.

Optionally, as shown in FIG. 5, the optical fiber connecting element 100 extends in the second area 14 and the fourth area 24.

Optionally, as shown in FIG. 5, the user box 10 further includes an optical fiber docking area 180. When not in use, the optical fiber connecting element 100 docks in the optical fiber docking area 180. Optical fibers that are not in use are accommodated in these docking areas to prevent these optical fibers from moving freely.

Optionally, as shown in FIG. 5, the user box 10 further includes an optical fiber splicing area 116, configured to splice the optical fiber connecting element 100, so that one end of the spliced optical fiber connecting element 100 is connected to the optical cable 112 connecting to the user network 1. The operator box 20 further includes an optical fiber splicing area 260, configured to splice a pigtail 214, so that the spliced pigtail 214 is connected to the connection optical cable 211 connecting to the external communications network 2.

Optionally, as shown in FIG. 5, the at least one operator box 20 further includes at least one optical fiber coiling area 270, configured to coil an optical fiber in the third area of the operator box 20. The at least one user box 10 further includes at least one optical fiber coiling area 118, configured to coil an optical fiber in the first area of the user box 10.

Optionally, if a new operator wants to take the place of a previous operator to provide a service to the users in the building, the optical fiber connecting element 100 of the user box 10 may be disconnected from a corresponding adapter 212 of an operator box and connected to a corresponding adapter of a new operator box. An optical fiber is connected to an optical fiber connecting element of the new operator box by using an optical fiber connector connected to the adapter, and then is connected, by using the optical fiber connecting element, to an optical cable connecting to an external communications network. In this implementation, a takeover operation of the new serving operator is simple, and interconnection and interworking between the operator box provided by the new serving operator and the user box can be fast implemented. Correspondingly, if there are a plurality of user boxes, optical fibers of different user boxes are connected to corresponding adapters in an operator box, and connected, by using the adapters, to an external communications network.

In the foregoing simple implementation of the FAT, operation flexibility is maximized when the external communications network is connected to the user network in the building.

In the foregoing implementation, each operator is allowed to use an operator box of the operator, and the operator box is structurally independent of a user box and another possible operator box of a rival operator. An optical fiber of the user box is connected to a corresponding adapter in the operator box of each operator, so that each operator is allowed to connect to each individual user in the building in a simple and fast manner. In a case of a new connection (for example, during construction of a building or when a specific dwelling unit is inhabited by a user) or when one or more users already decide not to use a service of a current provider, that is, when a previous serving operator is taken over or replaced by a new serving operator, each operator is allowed to perform the connection mention above in a simple and fast manner. When the previous operator is taken over, each operator is allowed to connect to a user, without interfering with a previous operator box.

Based on the FAT provided in the foregoing embodiment, an embodiment of this application further provides a method for connecting an external communications network (2) to a user network (1). The method includes the following steps:
(a) providing at least one user box (10), where the user box (10) includes: at least one optical cable inlet (110) and an optical cable (112) connecting to the user network (1), where the optical cable (112) connecting to the user network (1) passes through the optical cable inlet (110) to connect to the user network (1); and an optical fiber connecting element (100), where one end of the optical fiber connecting element (100) is connected to the optical cable (112) connecting to the user network (1), and the other end enters an operator box (20) through an optical cable hole (114);
(b) providing at least one operator box (20), where the operator box (20) includes:
   an optical cable inlet (210), where an optical cable (211) connecting to the external communications network (2) passes through the optical cable inlet (210) to connect to the external communications network (2); and a plurality of adapters (212), where the plurality of adapters (212) are disposed in a plurality of adjacent vertical arrays on a panel (280), one end of any one of the plurality of adapters (212) is connected to the optical fiber connecting element (100), and the other end is connected to the external communications network (2); and
(c) connecting one end of the optical fiber connecting element (100) of the at least one user box (10) to the adapter (212) in the operator box (20) through a lower optical cable hole (114a) of the user box (10) and an upper optical cable hole (2140a) of the operator box (20), to connect to the external communications network (2) by using the adapter, where the other end of the optical fiber connecting element (100) is connected to the user network (10).

Optionally, the step (c) is specifically:
connecting one end of the optical fiber connecting element (100) of the at least one user box (10) to a corresponding selected adapter in the plurality of adapters (212) of the operator box (20), where the selected adapter is connected to a connector (216) of a corresponding selected pigtail (214), to connect to the external communications network by using the pigtail (214), where the other end of the optical fiber connecting element (100) is connected to the user network (1).

The method further includes the following steps:
(d) providing at least one operator box (30), where the operator box (30) includes: an optical cable inlet (310), where an optical cable (311) connecting to an external communications network (3) passes through the optical cable inlet (310) to connect to the external communications network (3); and a plurality of adapters (312), where the plurality of adapters (212) are disposed in a plurality of adjacent vertical arrays on a panel (380); and
(e) when the optical fiber connecting element (100) is switched from the first operator box (20) to the third operator box (30), removing one end of the optical fiber connecting element (100) from an adapter in the first operator box (20), so that one end of the optical fiber connecting element (100) is connected to an adapter (312) in the third operator box (30) through a lower optical cable hole (2140b) of a second operator box (20) and an upper optical cable hole (3140a) of the third operator box (30), and the other end of the optical fiber connecting element (100) is connected to the external communications network (3) through the optical cable inlet (310).

For the foregoing method for connecting the external communications network (2) to the user network (1), refer to the descriptions in the foregoing embodiments. To avoid a repeated description, details are not described herein.

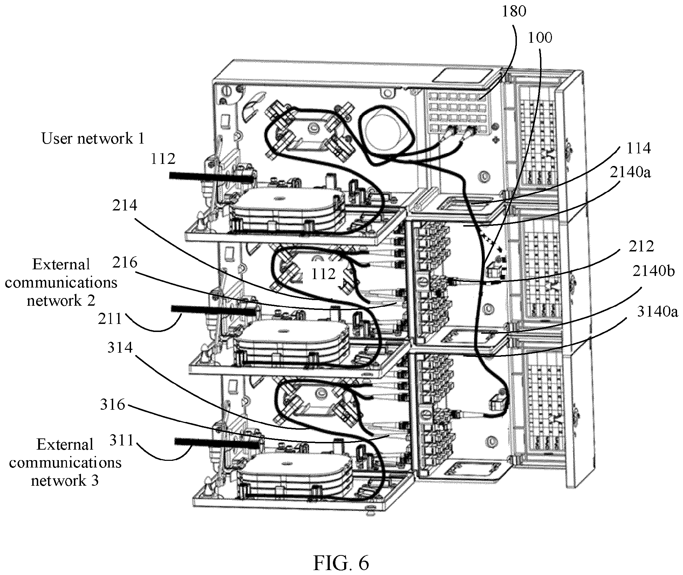

An embodiment of this application further provides a fiber access terminal. As shown in FIG. 6, the fiber access terminal includes: at least one user box (10), a first operator box (20), and a third operator box (30), where the user box (10) includes:
at least one optical cable inlet (110) and an optical cable (112) connecting to a user network (1), where the optical cable (112) connecting to the user network (1) passes through the optical cable inlet (110) to connect to the user network (1); and
an optical fiber connecting element (100), where one end of the optical fiber connecting element (100) is connected to the optical cable (112) connecting to the user network (1), and the other end enters the operator box (20) and/or the operator box (30) through an optical cable hole (114).

The operator box (20) includes:
an optical cable inlet (210), where an optical cable (211) connecting to an external communications network (2) passes through the optical cable inlet (210) to connect to the external communications network (2); and
a plurality of adapters (212), where the plurality of adapters (212) are disposed in a plurality of adjacent vertical arrays on a panel (280), one end of any one of the plurality of adapters (212) is connected to the optical fiber connecting element (100), and the other end is connected to the external communications network (2).

The third operator box (30) includes:
an optical cable inlet (310), where an optical cable (311) connecting to an external communications network (3) passes through the optical cable inlet (310) to connect to the external communications network (3); and
a plurality of adapters (312), where the plurality of adapters (212) are disposed in a plurality of adjacent vertical arrays on a panel (380).

When the optical fiber connecting element (100) is switched from the first operator box (20) to the third operator box (30), one end of the optical fiber connecting element (100) is removed from the adapter in the first operator box (20), so that one end of the optical fiber connecting element (100) is connected to an adapter (312) in the third operator box (30) through a lower optical cable hole (2140b) of a second operator box (20) and an upper optical cable hole (3140a) of the third operator box (30); and the other end of the optical fiber connecting element (100) is connected to the external communications network (3) through the optical cable inlet (310).

The optical fiber connecting element 100 is a pigtail for connecting the user box and the operator box.

Specifically, when a user switches between operators that provide services, the optical fiber connecting element 100 of the user box 10 is removed from the adapter in the operator box 20 and enters the operator box 30 through the lower optical cable hole 2140b of the operator box 20 and the upper optical cable hole 3140a of the operator box 30. Then, one end of the optical fiber connecting element 100 is inserted into a corresponding adapter 312 in the operator box 30, and the other end is connected to the external communications network 3 through the optical cable inlet 310.

With the fiber access terminal provided in the foregoing embodiment, especially when a user needs to switch to a new serving operator, only one connecting element 100 is needed in the user box to connect to two or more operator boxes, leading to simple implementation and strong operability.

Optionally, referring to the implementation provided in FIG. 6, the user box (10) includes a first area (12) and a second area (14), the operator box (20) includes a third area (22) and a fourth area (24), and the operator box (30) includes a fifth area (32) and a sixth area (34).

The third area (22) or the fifth area (32) is accessed by an operator that provides a service to the user network (1). The second area (14) and the fourth area (24) are shared areas, or the second area (14), the fourth area (24), and the sixth area (34) are shared areas.

Further, optionally, the operator box (20) further includes a pigtail (214), where one end of the pigtail (214) is provided with a connector (216), the connector (216) is connected to a corresponding adapter in the plurality of adapters (212), to connect to the user network (1) by using the optical fiber connecting element (100) connected to the any one adapter (212), and the other end of the pigtail (214) is connected to the external communications network (2) by using the connection optical cable (211) connected to the pigtail (214); and/or
the operator box (30) further includes a pigtail (314), where one end of the pigtail (314) is provided with a connector (316), the connector (316) is connected to a corresponding adapter in the plurality of adapters (312), to connect to the user network (1) by using the optical fiber connecting element (100) connected to the any one adapter (312), and the other end of the pigtail (314) is connected to the external communications network (3) by using the connection optical cable (211) connected to the pigtail (314).

The foregoing descriptions are merely example implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A fiber access terminal, comprising a user box (10) and an operator box (20), wherein the user box (10) comprises:
an optical cable inlet (110) and an optical cable (112) connecting to a user network (1), wherein the optical cable (112) connecting to the user network (1) passes through the optical cable inlet (110) to connect to the user network (1); and
an optical fiber connecting element (100), wherein one end of the optical fiber connecting element (100) is connected to the optical cable (112) connecting to the user network (1), and the other end enters the operator box (20) through an optical cable hole (114); and
the operator box (20) comprises:
an optical cable inlet (210), wherein an optical cable (211) connecting to an external communications network (2) passes through the optical cable inlet (210) to connect to the external communications network (2); and a plurality of adapters (212), wherein the plurality of adapters (212) are disposed in a plurality of adjacent vertical arrays on a panel (280), one end of any one of the plurality of adapters (212) is connected to the optical fiber connecting element (100), and the other end is connected to the external communications network (2); wherein the user box (10) comprises a first area (12) and a second area (14), the operator box (20) comprises a third area (22) and a fourth area (24), the third area (22) is accessed by an operator that provides a service to a user, and the second area (14) and the fourth area (24) are shared areas.

2. The fiber access terminal according to claim 1, wherein the operator box (20) further comprises a pigtail (214), one end of the pigtail (214) is provided with a connector (216), the connector (216) is connected to a corresponding adapter in the plurality of adapters (212), to connect to the user network (1) by using the optical fiber connecting element (100) connected to the any one adapter (212), and the other end of the pigtail (214) is connected to the external communications network (2) by using the connection optical cable (211) connected to the pigtail (214).

3. The fiber access terminal according to claim 1, wherein the third area (22) forms enclosed space by using a third enclosure door (220).

4. The fiber access terminal according to claim 1, wherein the optical fiber connecting element (100) extends in the second area (14) and the fourth area (24).

5. The fiber access terminal according to claim 1, wherein the user box (10) further comprises an optical fiber docking area (180), and when not in use, the optical fiber connecting element (100) docks in the optical fiber docking area (180).

6. The fiber access terminal according to claim 1, wherein the user box (10) further comprises an optical fiber splicing area (116), configured to splice the optical fiber connecting element (100), so that one end of the spliced optical fiber connecting element (100) is connected to the optical cable (112) connecting to the user network (1); and
the operator box (20) further comprises an optical fiber splicing area (260), configured to splice an optical fiber connecting element (214), so that the spliced pigtail (214) is connected to the connection optical cable (211) connecting to the external communications network (2).

7. The fiber access terminal according to claim 1, wherein at least one operator box (20) further comprises at least one optical fiber coiling area (270), configured to coil an optical fiber in the third area of the operator box (20); and the at least one user box (10) further comprises at least one optical fiber coiling area (118), configured to coil an optical fiber in the first area of the user box (10).

8. A fiber access terminal, comprising an operator box (20), wherein the operator box (20) comprises:
an optical cable inlet (210), wherein at least one connection optical cable 211 connecting to an external communications network (2) passes through the optical cable inlet (210) to connect to the external communications network (2); and
a plurality of adapters (212), wherein the plurality of adapters (212) are disposed in a plurality of adjacent vertical arrays on a panel (280), one end of any one of the plurality of adapters (212) is connected to an optical fiber connecting element (100), and the other end is connected to the external communications network (2); wherein
a user box (10) comprises a first area (12) and a second area (14), the operator box (20) comprises a third area (22) and a fourth area (24), the third area (22) is accessed by an operator that provides a service to a user network (1), and the second area (14) and the fourth area (24) are shared areas.

9. The fiber access terminal according to claim 8, wherein the operator box (20) further comprises an optical fiber connecting element (214), one end of the pigtail (214) is provided with a connector (216), the connector (216) is connected to the corresponding adapter in the plurality of adapters (212), to connect to the user network (1) by using the optical fiber connecting element (100) connected to the any one adapter (212), and the other end of the pigtail (214) is connected to the external communications network (2) by using the connection optical cable (211) connected to the pigtail (214).

10. The fiber access terminal according to claim 8 or 9, wherein the at least one operator box (20) further comprises at least one optical fiber coiling area (270), configured to coil an optical fiber in the third area of the operator box (20).

11. A method for connecting an external communications network (2) to a user network (1), wherein the method comprises the following steps:
(a) providing at least one user box (10), wherein the user box (10) comprises: at least one optical cable inlet (110) and an optical cable (112) connecting to the user network (1), wherein the optical cable (112) connecting to the user network (1) passes through the optical cable inlet (110) to connect to the user network (1); and an optical fiber connecting element (100), wherein one end of the optical fiber connecting element (100) is connected to the optical cable (112) connecting to the user network (1), and the other end enters an operator box (20) through an optical cable hole (114);
(b) providing at least one operator box (20), wherein the operator box (20) comprises:
an optical cable inlet (210), wherein an optical cable (211) connecting to the external communications network (2) passes through the optical cable inlet (210) to connect to the external communications network (2); and a plurality of adapters (212), wherein the plurality of adapters (212) are disposed in a plurality of adjacent vertical arrays on a panel (280), one end of any one of the plurality of adapters (212) is connected to the optical fiber connecting element (100), and the other end is connected to the external communications network (2); and
(c) connecting one end of the optical fiber connecting element (100) of the at least one user box (10) to the adapter (212) in the operator box (20) through a lower optical cable hole (114) of the user box (10) and an upper optical cable hole (2140a) of the operator box (20), to connect to the external communications network (2) by using the adapter, wherein the other end of the optical fiber connecting element (100) is connected to the user network (1).

12. The method according to claim 11, wherein the step (c) is specifically:
connecting one end of the optical fiber connecting element (100) of the at least one user box (10) to a corresponding selected adapter in the plurality of adapters (212) of the operator box (20), wherein the selected adapter is connected to a connector (216) of a corresponding selected pigtail (214), to connect to the external communications network by using the pigtail (214), wherein the other end of the optical fiber connecting element (100) is connected to the user network (1).

13. The method according to claim 11 or 12, wherein the method further comprises the following steps:
(d) providing at least one operator box (30), wherein the operator box (30) comprises: an optical cable inlet (310), wherein an optical cable (311) connecting to an external communications network (3) passes through the optical cable inlet (310) to connect to the external communications network (3); and a plurality of adapters (312), wherein the plurality of adapters (312) are disposed in a plurality of adjacent vertical arrays on a panel (380); and
(e) when the optical fiber connecting element (100) is switched from the first operator box (20) to the third operator box (30), removing one end of the optical fiber connecting element (100) from an adapter in the first operator box (20), so that one end of the optical fiber connecting element (100) is connected to an adapter (312) in the third operator box (30) through a lower optical cable hole (2140b) of a second operator box (20) and an upper optical cable hole (3140a) of the third operator box (30), and the other end of the optical fiber connecting element (100) is connected to the user network (1).

14. A fiber access terminal, comprising: at least one user box (10), a first operator box (20), and a third operator box (30), wherein the user box (10) comprises:
at least one optical cable inlet (110) and an optical cable (112) connecting to a user network (1), wherein the optical cable (112) connecting to the user network (1) passes through the optical cable inlet (110) to connect to the user network (1); and
an optical fiber connecting element (100), wherein one end of the optical fiber connecting element (100) is connected to the optical cable (112) connecting to the user network (1), and the other end enters the operator box (20) and/or the operator box (30) through an optical cable hole (114);
the operator box (20) comprises:
an optical cable inlet (210), wherein an optical cable (211) connecting to an external communications network (2) passes through the optical cable inlet (210) to connect to the external communications network (2); and
a plurality of adapters (212), wherein the plurality of adapters (212) are disposed in a plurality of adjacent vertical arrays on a panel (280), one end of any one of the plurality of adapters (212) is connected to the optical fiber connecting element (100), and the other end is connected to the external communications network (2);
the third operator box (30) comprises:
an optical cable inlet (310), wherein an optical cable (311) connecting to an external communications network (3) passes through the optical cable inlet (310) to connect to the external communications network (3); and
a plurality of adapters (312), wherein the plurality of adapters (212) are disposed in a plurality of adjacent vertical arrays on a panel (380); wherein
when the optical fiber connecting element (100) is switched from the first operator box (20) to the third operator box (30), one end of the optical fiber connecting element (100) is removed from the adapter in the first operator box (20), so that one end of the optical fiber connecting element (100) is connected to any one adapter (312) in the third operator box (30) through a lower optical cable hole (2140b) of a second operator box (20) and an upper optical cable hole (3140a) of the third operator box (30), and the other end of the optical fiber connecting element (100) is connected to the external communications network (3) through the optical cable inlet (310).

15. The fiber access terminal according to claim 14, wherein the user box (10) comprises a first area (12) and a second area (14), the operator box (20) comprises a third area (22) and a fourth area (24), and the operator box (30) comprises a fifth area (32) and a sixth area (34); wherein
the third area (22) or the fifth area (32) is accessed by an operator that provides a service to the user network (1), and the second area (14) and the fourth area (24) are shared areas, or the second area (14), the fourth area (24), and the sixth area (34) are shared areas.

16. The fiber access terminal according to claim 14 or 15, wherein the operator box (20) further comprises a pigtail (214), wherein one end of the pigtail (214) is provided with a connector (216), the connector (216) is connected to a corresponding adapter in the plurality of adapters (212), to connect to the user network (1) by using the optical fiber connecting element (100) connected to the any one adapter (212), and the other end of the pigtail (214) is connected to the external communications network (2) by using the connection optical cable (211) connected to the pigtail (214); and/or
the operator box (30) further comprises a pigtail (314), wherein one end of the pigtail (314) is provided with a connector (316), the connector (316) is connected to a corresponding adapter in the plurality of adapters (312), to connect to the user network (1) by using the optical fiber connecting element (100) connected to the any one adapter (312), and the other end of the pigtail (314) is connected to the external communications network (3) by using the connection optical cable (311) connected to the pigtail (314).
